# EUROPÄISCHE PATENTSCHRIFT

(11) **EP 4 238 895 B1**
(45) Veröffentlichungstag und Bekanntmachung des Hinweises auf die Patenterteilung: **10.07.2024**
(21) Anmeldenummer: 22159994.7
(22) Anmeldetag: 03.03.2022
(51) Int. Cl.: B65G 1/04, B65G 57/30

(54) **BLOCKLAGERANORDNUNG**
BLOCK STORAGE ARRANGEMENT
AGENCEMENT D'ENTREPOSAGE EN BLOCS

(43) Veröffentlichungstag der Anmeldung: 06.09.2023
(73) Patentinhaber: Jungheinrich Aktiengesellschaft, 22047 Hamburg (DE)
(72) Erfinder: Becker, Michael, 63512 Hainburg (DE); Morawietz, Timm, 66636 Tholey-Überroth (DE); Alberg, M. Eng. (FH) Anatolij, 64319 Pfungstadt (DE); Gerhardt, Marc, 36088 Hünfeld (DE)
(74) Vertreter: Keil & Schaafhausen Patentanwälte PartGmbB

(56) Entgegenhaltungen:
- EP-A1- 3 782 930
- DE-A1- 102016 125 786
- DE-A1- 19 849 391

## Beschreibung

Die vorliegende Erfindung betrifft eine Blocklageranordnung mit mehreren Behälteraufnahmeräumen, einem in Schwerkraftrichtung unterhalb der Behälteraufnahmeräume angeordneten Beschickungsraum, jeweils einer Durchgangsöffnung zwischen den Behälteraufnahmeräumen und dem Beschickungsraum und einer in der Durchgangsöffnung angeordneten Halteeinrichtung, die eine um eine Achse zwischen einer Halteposition und einer Freigabeposition verschwenkbare Klappe aufweist, wobei die Achse im Rand der Durchgangsöffnung gelagert ist.

Eine derartige Blocklageranordnung ist beispielsweise aus EP 3 782 930 A1 bekannt.

Eine Blocklageranordnung, die auch als "Stapellageranordnung" bezeichnet werden kann, dient dazu, eine große Anzahl von Behältern in einem relativ geringem Raum unterzubringen. Die Behälter werden hierbei in Form von Stapeln aufgenommen, so dass sie in Schwerkraftrichtung dicht übereinander angeordnet werden können. Die Behälterstapel können in den Behälteraufnahmeräumen angeordnet sein. Die Behälteraufnahmeräume können in einer Ebene senkrecht zur Schwerkraftrichtung ebenfalls dicht benachbart zueinander angeordnet werden, so dass der zur Verfügung stehende Bauraum relativ gut ausgenutzt wird.

Im vorliegenden Fall werden die Behälteraufnahmeräume in Schwerkraftrichtung von unten beschickt, d.h. ein Behälter wird von unten in einen Behälteraufnahmeraum eingebracht und auch nach unten aus dem Behälteraufnahmeraum entnommen.

Hierzu wird ein Beschickungsfahrzeug verwendet, das im Beschickungsraum verfahrbar ist. Zum Einlagern eines Behälters in einen Behälteraufnahmeraum wird das Beschickungsfahrzeug mit dem darauf befindlichen Behälter in eine Position unterhalb des gewünschten Behälteraufnahmeraumes gefahren. Der Behälter wird dann durch das Beschickungsfahrzeug angehoben, bis er an der Halteeinrichtung vorbeigetreten ist. Wenn der Behälter dann durch das Beschickungsfahrzeug wieder abgesenkt wird, wird der Behälter in der Halteeinrichtung gehalten. Wenn sich bereits ein oder mehrere Behälter in dem betreffenden Behälterraum befunden haben, dann bildet der neu eingelagerte Behälter den untersten Behälter eines Behälterstapels.

Zum Entnehmen eines Behälters aus dem Behälteraufnahmeraum wird ebenfalls das Beschickungsfahrzeug verwendet. Das Beschickungsfahrzeug wird unterhalb des Behälteraufnahmeraumes positioniert und eine Hubeinrichtung des Beschickungsfahrzeugs wird angehoben, bis sie den untersten Behälter mit anheben kann. Der Behälter, ggfs. mit weiteren darauf befindlichen Behältern, wird angehoben, bis er von der Halteeinrichtung freikommt. Die Halteeinrichtung wird dann in eine Freigabeposition gebracht und der Behälter kann abgesenkt werden. Beim Absenken wird die Halteeinrichtung wieder aktiviert, so dass der bislang vorletzte Behälter von der Halteeinrichtung gehalten wird. Wenn mehrere Behälter auf einmal aus dem Behälteraufnahmeraum entnommen werden sollen, kann die Halteeinrichtung auch erst dann aktiviert werden, wenn die gewünschte Anzahl von Behältern aus dem Behälteraufnahmeraum entnommen worden ist.

Die Halteeinrichtung weist zum Halten eines Behälters eine oder mehrere Klappen auf, die zwischen einer Halteposition und einer Freigabeposition verschwenkbar sind. Zum Verschwenken weist die Klappe eine Achse auf, die am Rand der Durchgangsöffnung gelagert ist.

Im Fall einer Beschädigung muss die Klappe leicht ausgewechselt werden können.

Der Erfindung liegt die Aufgabe zugrunde, eine Blocklageranordnung auf einfache Weise wartungsfreundlich auszubilden.

Diese Aufgabe wird bei einer Blocklageranordnung der eingangs genannten Art dadurch gelöst, dass die Achse an mindestens einem Ende in einer in Schwerkraftrichtung nach oben offenen Bolzenpfanne gelagert ist, wobei ein Achsniederhalter am Rand der Durchgangsöffnung befestigt ist, der zumindest teilweise in Schwerkraftrichtung oberhalb der Bolzenpfanne angeordnet ist und auf das Ende der Achse wirkt.

Mit dieser Ausgestaltung kann die Klappe relativ einfach ausgewechselt werden oder es können auf einfache Weise Wartungsarbeiten an der Klappe vorgenommen werden, für die die Klappe insgesamt leicht zugänglich sein muss. Hierzu muss lediglich der Achsniederhalter aus der Durchgangsöffnung entfernt werden und die Achse der Klappe kann dann in Schwerkraftrichtung nach oben aus der Bolzenpfanne herausgenommen werden. Im Betrieb wird die Achse jedoch von dem Achsniederhalter in der Bolzenpfanne gehalten, so dass eine von unten auf die Klappe wirkende Kraft nicht dazu führt, dass die Klappe ihre vorbestimmte Position verlassen kann.

Vorzugsweise ist die Klappe in einer Ecke der Durchgangsöffnung zwischen einer Längsseite und einer Querseite angeordnet und der Achsniederhalter ist sowohl mit der Längsseite als auch mit der Querseite verbunden. Der Achsniederhalter wird dadurch auf einfache Weise gegen ein Kippen gesichert, ohne dass für die Verbindung zwischen dem Achsniederhalter und dem Rand der Durchgangsöffnung ein übermäßig großer Aufwand betrieben werden muss.

Vorzugsweise ist der Achsniederhalter mit dem Rand der Durchgangsöffnung mit Hilfe von Schrauben verbunden. Es können beispielsweise vier Schrauben vorgesehen sein, von denen jeweils zwei in der Längsseite und zwei in der Querseite befestigt sind. Die Verwendung von Schrauben ist eine relativ einfache Maßnahme.

Vorzugsweise weist der Achsniederhalter für jede der Schrauben einen dem Rand der Durchgangsöffnung zugewandten Schraubdom auf. Ein Schraubdom ermöglicht auch bei toleranzbehafteten Elementen, die den Rand der Durchgangsöffnung bilden, ein Verschrauben ohne Verspannen der jeweiligen Teile. Das Risiko, dass sich der Achsniederhalter in unerwünschter Weise verformt, wird dadurch klein gehalten.

Vorzugsweise ist die Klappe durch eine Feder in die Halteposition vorgespannt. Durch die Verwendung des Achsniederhalters kann man dann durchaus eine größere Vorspannkraft verwenden. Auch die Feder neigt gelegentlich dazu, die Achse der Klappe aus der Bolzenpfanne herauszudrücken. Dies wird durch den Achsniederhalter zuverlässig verhindert.

Hierbei ist bevorzugt, dass die Feder als Schraubenfeder ausgebildet ist, die auf dem Ende der Achse angeordnet ist. Dies ist eine relativ einfache Möglichkeit, die Feder entsprechend zu positionieren.

Vorzugsweise weist die Durchgangsöffnung ein Positionierprofil auf und der Achsniederhalter weist ein daran angepasstes Gegenprofil auf. Damit ist es auf einfache Weise möglich, den Achsniederhalter in der Durchgangsöffnung mit hoher Wiederholgenauigkeit an einer gewünschten Position zu positionieren.

Bevorzugterweise ist der Achsniederhalter als Kunststoffelement ausgebildet. Der Achsniederhalter kann beispielsweise als Spritzgussteil ausgebildet sein. Der Achsniederhalter ist damit relativ kostengünstig.

Vorzugsweise weist der Achsniederhalter in seinem in Schwerkraftrichtung unteren Ende eine Einführfase auf. Dies erleichtert es, einen Behälter von unten durch die Durchgangsöffnung in den Behälteraufnahmeraum einzuschieben. Die Einführfase ist dann in der Lage, kleine Ungenauigkeiten bei der Positionierung des Beschickungsfahrzeugs unterhalb des Behälteraufnahmeraums auszugleichen.

Bevorzugterweise ist die Durchgangsöffnung in einem Rahmen ausgebildet, der zwischen den Behälteraufnahmeräumen und dem Beschickungsraum angeordnet ist, wobei die Achse in dem Rahmen gelagert ist. Der Rahmen trägt damit das Gewicht der Behälterstapel in den Behälteraufnahmeräumen. Der Rahmen kann auch dazu verwendet werden, Ständer zu montieren, die zwischen Behälteraufnahmeräumen angeordnet sind und eine Art Kippsicherung für die Behälterstapel bilden. Die Verwendung eines Rahmens ermöglicht es, die Durchgangsöffnung mit geringem Aufwand in Beziehung zu den jeweiligen Behälteraufnahmeräumen zu positionieren und die Form der Durchgangsöffnungen mit einer hohen Genauigkeit sicher zu stellen.

Vorzugsweise weist der Achsniederhalter in Schwerkraftrichtung eine Erstreckung auf, mit der er den Rahmen in Schwerkraftrichtung überdeckt. Ein Behälter, der in einem Behälteraufnahmeraum eingelagert wird oder aus einem Behälteraufnahmeraum entnommen wird, kommt dann nicht in Kontakt mit dem Rahmen. Der Rahmen kann also ausschließlich im Hinblick auf eine mechanische Stabilität ausgebildet werden.

Vorzugsweise weist der Achsniederhalter eine Ausnehmung auf, in der die Klappe in der Freigabeposition aufgenommen ist. Wenn sich die Klappe in der Freigabeposition befindet, dann steht sie nicht über den Achsniederhalter vor, so dass der Achsniederhalter gegenüber dem Behälter eine glatte Fläche bildet und ein Verhaken von Behälter und Klappe verhindert wird. Besonders bevorzugt ist, dass die Klappe in der Freigabestellung mit der der Durchgangsöffnung zugewandten Seite des Achsniederhalters abschließt.

Vorzugsweise bildet der Achsniederhalter auf seiner der Durchgangsöffnung zugewandten Seite eine Gleitfläche. Die Gleitfläche ist glatt ausgebildet, was sich bei Verwendung eines Kunststoffteils relativ leicht realisieren lässt. Die Gleitfläche erleichtert es einem Behälter, an dem Achsniederhalter entlangzugleiten.

Vorzugsweise weist der Rahmen Längsträger und Querträger auf, die durch Winkelelemente miteinander verbunden sind, wobei der Achsniederhalter an einem Winkelelement befestigt ist und der Achsniederhalter über das Winkelelement in Richtung auf den am Winkelelement befestigten Längsträger und/oder Querträger vorsteht. Der Achsniederhalter bildet damit gleichzeitig eine Positionierhilfe für den Längsträger und/oder den Querträger. Wenn am Winkelelement ein Längsträger und/oder ein Querträger befestigt ist und ein Achsniederhalter auf beiden Seiten des Längsträgers und/oder des Querträgers angeordnet ist, dann bilden die beiden Achsniederhalter eine Nut, in die der Längsträger bzw. der Querträger eingesetzt werden kann.

Die Erfindung wird im Folgenden anhand eines bevorzugten Ausführungsbeispiels in Verbindung mit der Zeichnung beschrieben. Hierin zeigen:
- Fig. 1: eine stark schematisierte Darstellung einer Blocklageranordnung,
- Fig. 2: eine Ecke einer Durchgangsöffnung,
- Fig. 3: die Ecke der Durchgangsöffnung ohne Achsniederhalter,
- Fig. 4: einen Achsniederhalter von seiner der Durchgangsöffnung abgewandten Seite,
- Fig. 5: ein Winkelelement mit vier Achsniederhaltern und
- Fig. 6: eine schematische Darstellung zur Erläuterung der Funktion des Achsniederhalters.

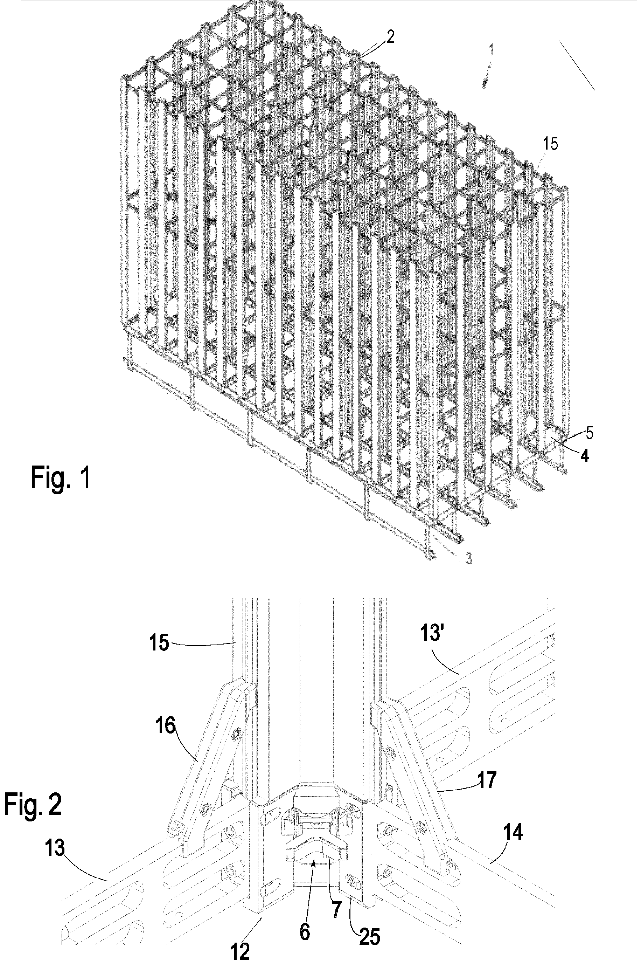

Fig. 1 zeigt stark schematisiert eine Blocklageranordnung 1 mit mehreren Behälteraufnahmeräumen 2 und einem Beschickungsraum 3, der in Schwerkraftrichtung unterhalb der Behälteraufnahmeräume 2 angeordnet ist.

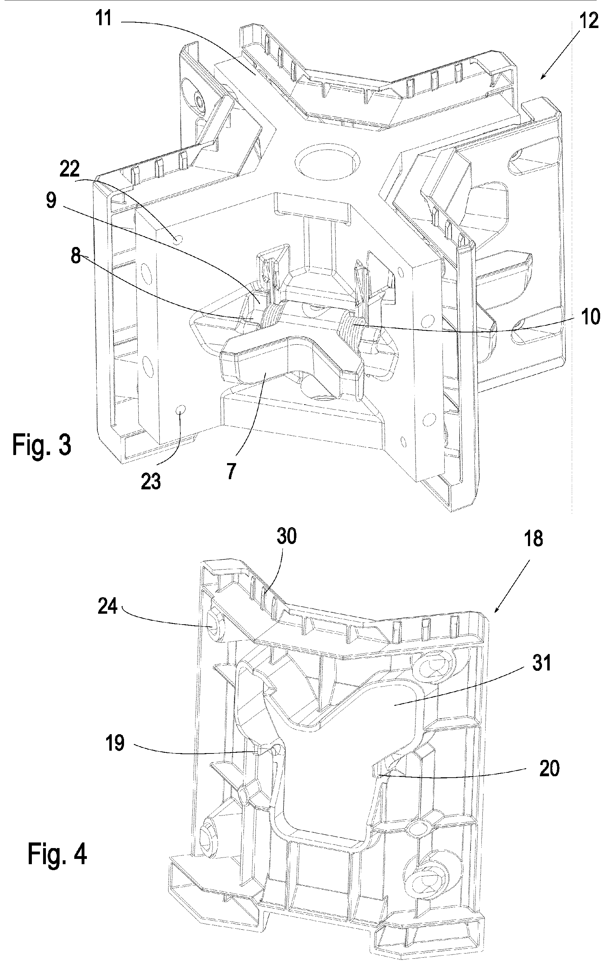

Zwischen jedem Behälteraufnahmeraum 2 und dem Beschickungsraum 3 ist eine Durchgangsöffnung 4 angeordnet. Die Durchgangsöffnung 4 ist in einem Rahmen 5 ausgebildet. Die Durchgangsöffnung 4 weist eine in Fig. 2 für eine Ecke näher dargestellte Halteeinrichtung 6 auf, die eine Klappe 7 aufweist, die um eine Achse 8 (Fig. 3) verschwenkbar ist. Die Achse 8 ist im Rahmen 5 gelagert, so dass die Klappe 7 aus einer in den Fig. 2, 3 und 5 dargestellte Halteposition in eine Freigabeposition verschwenkbar ist, in der sie in Schwerkraftrichtung nach oben weist.

Die Achse 8 ist mit ihren beiden Enden in einer in Schwerkraftrichtung nach oben offenen Bolzenpfanne 9 gelagert. Die Klappe 7 ist durch eine Feder 10 in die Halteposition vorgespannt. Die Feder 10 ist als Schraubenfeder ausgebildet, die auf dem Ende der Achse 8 angeordnet ist.

Die Bolzenpfanne 9 ist in einem Korpus 11 eines Winkelelements 12 ausgebildet, das an den Ecken der Durchgangsöffnung angeordnet ist. Das Winkelelement 12 verbindet einen Längsträger 13 und einen Querträger 14. Der Längsträger 13 ist an einer Längsseite der Durchgangsöffnung 4 angeordnet und der Querträger 14 ist an einer Querseite der Durchgangsöffnung 4 angeordnet.

Auf dem Winkelelement 12 ist ein Ständer 15 angeordnet. Der Ständer 15 ist mit dem Längsträger 13 über eine erste Strebenanordnung 16 und mit dem Querträger 14 über eine zweite Strebenanordnung 17 verbunden. Wie man in Fig. 2 erkennen kann, ist an dem Winkelelement 12 noch ein weiterer Längsträger 13' einer benachbarten Durchgangsöffnung 4 angeordnet.

Die in Fig. 3 dargestellte Klappe 7 würde, wenn sie von unten von einem Behälter kontaktiert wird, aus der nach oben offenen Bolzenpfanne 9 herausgedrückt werden. Um dies zu verhindern, ist ein Achsniederhalter 18 vorgesehen, der in Fig. 4 von seiner der Durchgangsöffnung 4 abgewandten Seite dargestellt ist. Der Achsniederhalter 18 weist zwei Vorsprünge 19, 20 auf, die, wenn der Achsniederhalter 18 am Korpus 11 montiert ist, in Schwerkraftrichtung oberhalb der Bolzenpfanne 9 angeordnet sind und auf das Ende der Achse 8 wirken. Wenn also der Achsniederhalter 18 am Korpus 11 montiert ist, kann die Achse 8 der Klappe 7 nicht mehr aus der Bolzenpfanne 9 herausgedrückt werden.

Der Achsniederhalter 18 ist mit Hilfe von vier Schrauben 21 (es können auch eine andere Anzahl von Schrauben vorgesehen sein) am Korpus 11 des Winkelelements 12 befestigt. Hierzu weist der Korpus 11 mehrere Schraubenlöcher 22, 23 auf. Der Achsniederhalter 18 weist für jede Schraube einen Schraubdom 24 auf, der auch bei einem toleranzbehafteten Korpus 11, der z.B. als Gussteil ausgebildet sein kann, ein Verschrauben des Achsniederhalters 18 mit dem Korpus 11 ermöglicht, ohne dass der Achsniederhalter 18 verspannt wird.

Der Achsniederhalter 18 weist an seinem in Schwerkraftrichtung unteren Ende eine Einführfase 25 auf, die das Einfädeln eines Behälters durch die Durchgangsöffnung 4 erleichtert. Eine entsprechende Einführfase kann auch am in Schwerkraftrichtung oberen Ende ausgebildet sein.

Der Korpus 11 weist einen Längsfortsatz 26 auf, der mit dem Längsträger 13 verbunden ist, und einen Querfortsatz 27, der mit dem Querträger 14 verbunden ist. Der Achsniederhalter 18 ist sowohl mit dem Längsfortsatz 26 als auch mit dem Querfortsatz 27 verbunden. Der Achsniederhalter 18 weist also zwei Flanken 28, 29 auf, die im Wesentlichen unter einem rechten Winkel zueinander ausgerichtet sind.

Das Winkelelement 12 weist in nicht näher dargestellter Weise ein Positionierprofil auf. Der Achsniederhalter 18 weist ein daran angepasstes Gegenprofil 30 auf, so dass der Achsniederhalter 18 wiederholbar sehr genau am Korpus 11 des Winkelelements 12 positioniert werden kann.

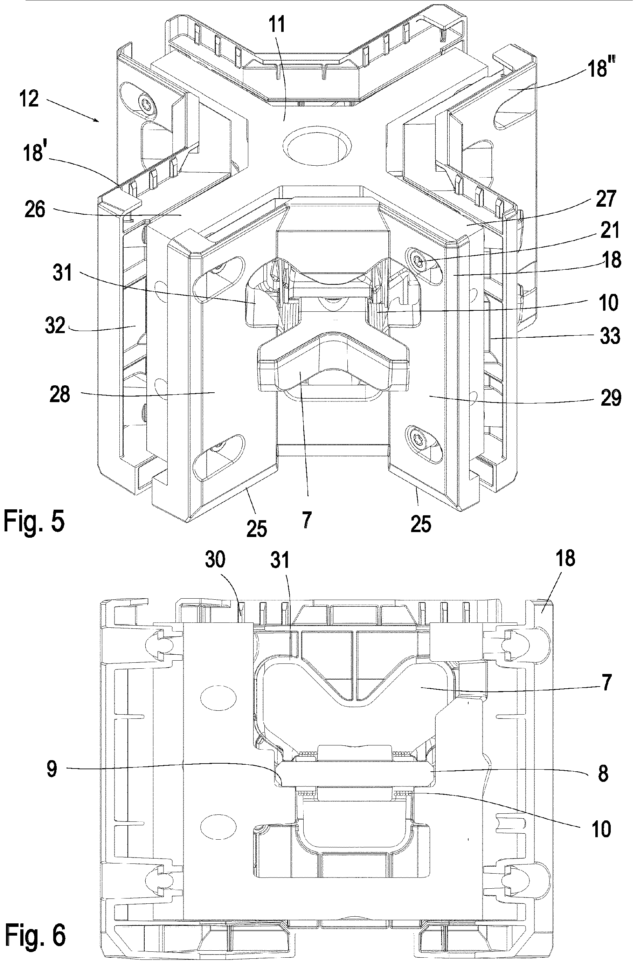

Der Achsniederhalter 18 weist eine Ausnehmung 31 auf, die als Durchgangsöffnung ausgebildet ist. Die Ausnehmung 31 ist an die Form der Klappe 7 angepasst. Wenn also die Klappe, wie in Fig. 6 dargestellt, in die Freigabeposition verschwenkt worden ist, dann füllt sie die Ausnehmung 31 weitgehend aus. Die Klappe 7 schließt dann mit der der Durchgangsöffnung 4 zugewandten Seite des Achsniederhalters 18 ab. In der Freigabeposition steht die Klappe 7 also nicht über die der Durchgangsöffnung 4 zugewandten Seite des Achsniederhalters 18 über, so dass ein Behälter nicht an der Klappe 7 hängen bleiben kann. Der Achsniederhalter 18 bildet mit seiner der Durchgangsöffnung 4 zugewandten Seite eine Gleitfläche, die ein reibungsarmes gleiten eines Behälters am Achsniederhalter 18 ermöglicht.

Wie man in Fig. 5 erkennen kann, steht der Achsniederhalter 18 sowohl über den Längsfortsatz 26 in Richtung auf den Längsträger 13 als auch über den Querfortsatz 27 in Richtung auf den Querträger 14 über. Zwischen zwei Achsniederhaltern 18, 18', die auf beiden Seiten des Längsfortsatzes 26 angeordnet sind, ergibt sich damit ein Spalt 32, der zur Positionierung des Längsträgers 13 verwendet werden kann. In gleicher Weise ergibt sich zwischen zwei Achsniederhaltern 18, 18", die am Querfortsatz 27 montiert sind, ein Spalt 33, der zur Positionierung des Querträgers 14 verwendet werden kann.

Der Achsniederhalter 18 weist in Schwerkraftrichtung eine Erstreckung auf, mit der er das Winkelelement 12 und damit den Rahmen 5 in Schwerkraftrichtung überdeckt. Wenn also ein Behälter in einen Behälteraufnahmeraum 2 eingeführt oder von dort entnommen wird, kommt der Behälter mit dem Rahmen 5 nicht in Kontakt. Der Rahmen 5 kann damit ausschließlich im Hinblick auf seine mechanische Stabilität hin dimensioniert werden. Die Führung des Behälters wird durch den Achsniederhalter 18 übernommen.

Der Achsniederhalter 18 ist als Kunststoffelement ausgebildet. Die der Durchgangsöffnung 4 zugewandte Seite kann daher relativ glatt ausgebildet sein, was sich positiv auf die Gleiteigenschaften der Gleitfläche auswirkt.

## Patentansprüche

1. Blocklageranordnung mit mehreren Behälteraufnahmeräumen (2), einem in Schwerkraftrichtung unterhalb der Behälteraufnahmeräumen (2) angeordneten Beschickungsraum (3), jeweils einer Durchgangsöffnung (4) zwischen den Behälteraufnahmeräumen (2) und dem Beschickungsraum (3) und einer in der Durchgangsöffnung angeordneten Halteeinrichtung, die eine um eine Achse (8) zwischen einer Halteposition und einer Freigabeposition verschwenkbare Klappe (7) aufweist, wobei die Achse (8) im Rand der Durchgangsöffnung (4) gelagert ist, **dadurch gekennzeichnet, dass** die Achse (8) an mindestens einem Ende in einer in Schwerkraftrichtung nach oben offenen Bolzenpfanne (9) gelagert ist, wobei ein Achsniederhalter (18) am Rand der Durchgangsöffnung (4) befestigt ist, der zumindest teilweise in Schwerkraftrichtung oberhalb der Bolzenpfanne (9) angeordnet ist und auf das Ende der Achse (8) wirkt.

2. Blocklageranordnung nach Anspruch 1, **dadurch gekennzeichnet, dass** die Klappe (7) in einer Ecke der Durchgangsöffnung (4) zwischen einer Längsseite und einer Querseite angeordnet ist und der Achsniederhalter (18) sowohl mit der Längsseite als auch mit der Querseite verbunden ist.

3. Blocklageranordnung nach Anspruch 2, **dadurch gekennzeichnet, dass** der Achsniederhalter (18) mit dem Rand der Durchgangsöffnung (4) mit Hilfe von Schrauben (21) verbunden ist.

4. Blocklageranordnung nach Anspruch 3, **dadurch gekennzeichnet, dass** der Achsniederhalter (18) für jede der Schrauben (21) einen dem Rand der Durchgangsöffnung (4) zugewandten Schraubdom (24) aufweist.

5. Blocklageranordnung nach einem der Ansprüche 1 bis 4, **dadurch gekennzeichnet, dass** die Klappe (7) durch eine Feder (10) in die Halteposition vorgespannt ist.

6. Blocklageranordnung nach Anspruch 5, **dadurch gekennzeichnet, dass** die Feder (10) als Schraubenfeder ausgebildet ist, die auf dem Ende der Achse (8) angeordnet ist.

7. Blocklageranordnung nach einem der Ansprüche 1 bis 6, **dadurch gekennzeichnet, dass** die Durchgangsöffnung (4) ein Positionierprofil aufweist und der Achsniederhalter (18) ein daran angepasstes Gegenprofil (31) aufweist.

8. Blocklageranordnung nach einem der Ansprüche 1 bis 7, **dadurch gekennzeichnet, dass** der Achsniederhalter (18) als Kunststoffelement ausgebildet ist.

9. Blocklageranordnung nach einem der Ansprüche 1 bis 8, **dadurch gekennzeichnet, dass** der Achsniederhalter (18) an seinem in Schwerkraftrichtung unteren Ende eine Einführfase (25) aufweist.

10. Blocklageranordnung nach einem der Ansprüche 1 bis 9, **dadurch gekennzeichnet, dass** die Durchgangsöffnung (4) in einem Rahmen (5) ausgebildet ist, der zwischen den Behälteraufnahmeräumen (2) und dem Beschickungsraum (3) angeordnet ist, wobei die Achse (8) in dem Rahmen (5) gelagert ist.

11. Blocklageranordnung nach Anspruch 10, **dadurch gekennzeichnet, dass** der Achsniederhalter (18) in Schwerkraftrichtung eine Erstreckung aufweist, mit der er den Rahmen (5) in Schwerkraftrichtung überdeckt.

12. Blocklageranordnung nach Anspruch 11, **dadurch gekennzeichnet, dass** der Achsniederhalter (18) eine Ausnehmung (31) aufweist, in der die Klappe (7) in der Freigabeposition aufgenommen ist.

13. Blocklageranordnung nach einem der Ansprüche 10 bis 12, **dadurch gekennzeichnet, dass** der Achsniederhalter (18) auf seiner der Durchgangsöffnung (4) zugewandten Seite eine Gleitfläche bildet.

14. Blocklageranordnung nach einem der Ansprüche 10 bis 12, **dadurch gekennzeichnet, dass** der Rahmen (5) Längsträger (13,13') und Querträger (14) aufweist, die durch Winkelelemente (12) miteinander verbunden sind, wobei der Achsniederhalter (18) an einem Winkelelement (12) befestigt ist und der Achsniederhalter (18) über das Winkelelement (12) in Richtung auf den am Winkelelement (12) befestigten Längsträger (13, 13') und/oder Querträger (14) vorsteht.

## Claims

1. Block stacking arrangement, comprising a plurality of container receiving slots (2), a loading space (3) arranged below the container receiving slots (2) in the direction of gravity, a respective pass-through opening (4) between the container receiving slots (2) and the loading space (3), and a holding device arranged in the pass-through opening, which holding device has a flap (7) that can be pivoted about a shaft (8) between a holding position and a release position, wherein the shaft (8) is mounted in the edge of the pass-through opening (4), **characterized in that** the shaft (8) is mounted at at least one end in a bolt socket (9) that is upwardly open in the direction of gravity, wherein a shaft hold-down device (18) is fastened to the edge of the pass-through opening (4), which shaft hold-down device is arranged at least partially above the bolt socket (9) in the direction of gravity and acts on the end of the shaft (8).

2. Block stacking arrangement according to Claim 1, **characterized in that** the flap (7) is arranged in a corner of the pass-through opening (4) between a longitudinal side and a transverse side, and the shaft hold-down device (18) is connected both to the longitudinal side and to the transverse side.

3. Block stacking arrangement according to Claim 2, **characterized in that** the shaft hold-down device (18) is connected to the edge of the pass-through opening (4) by means of screws (21).

4. Block stacking arrangement according to Claim 3, **characterized in that** the shaft hold-down device (18) has a screw boss (24) facing the edge of the pass-through opening (4) for each of the screws (21).

5. Block stacking arrangement according to any one of Claims 1 to 4, **characterized in that** the flap (7) is pretensioned into the holding position by a spring (10).

6. Block stacking arrangement according to Claim 5, **characterized in that** the spring (10) is designed as a coil spring arranged on the end of the shaft (8).

7. Block stacking arrangement according to any one of Claims 1 to 6, **characterized in that** the pass-through opening (4) has a positioning profile and the shaft hold-down device (18) has a matching counter-profile (31).

8. Block stacking arrangement according to any one of Claims 1 to 7, **characterized in that** the shaft hold-down device (18) is designed as a plastic element.

9. Block stacking arrangement according to any one of Claims 1 to 8, **characterized in that** the shaft hold-down device (18) has an insertion bevel (25) at its lower end in the direction of gravity.

10. Block stacking arrangement according to any one of Claims 1 to 9, **characterized in that** the pass-through opening (4) is formed in a frame (5) arranged between the container receiving slots (2) and the loading space (3), wherein the shaft (8) is mounted in the frame (5).

11. Block stacking arrangement according to Claim 10, **characterized in that** the shaft hold-down device (18) has an extension in the direction of gravity with which it covers the frame (5) in the direction of gravity.

12. Block stacking arrangement according to Claim 11, **characterized in that** the shaft hold-down device (18) has a recess (31) in which the flap (7) is received in the release position.

13. Block stacking arrangement according to any one of Claims 10 to 12, **characterized in that** the shaft hold-down device (18) forms a sliding surface on its side facing the pass-through opening (4).

14. Block stacking arrangement according to any one of Claims 10 to 12, **characterized in that** the frame (5) has longitudinal members (13, 13') and cross-members (14), which are connected to one another by means of angle elements (12), wherein the shaft hold-down device (18) is fastened to an angle element (12) and the shaft hold-down device (18) projects beyond the angle element (12) in the direction of the longitudinal member (13, 13') and/or cross-member (14) fastened to the angle element (12).

## Revendications

1. Agencement d'entreposage en blocs avec plusieurs espaces de logement pour conteneurs (2), un espace de chargement (3) disposé en direction de la force de gravité en dessous des espaces de logement pour conteneurs (2), une ouverture de passage (4) située respectivement entre les espaces de logement pour conteneurs (2) et l'espace de chargement (3) et un dispositif de retenue disposé dans l'ouverture de passage, qui comporte un volet pivotable (7) autour d'un axe (8) entre une position de retenue et une position de libération, sachant que l'axe (8) est logé au bord de l'ouverture de passage (4), **caractérisé en ce que** l'axe (8) est logé sur au moins une extrémité dans une cavité d'axe (9) ouverte vers le haut en direction de la force de gravité, sachant qu'un serre-flan axial (18) est fixé au bord de l'ouverture de passage (4), qui est disposé au moins en partie dans la direction de la force de gravité au-dessus de la cavité pour axe (9) et agit sur l'extrémité de l'axe (8).

2. Agencement d'entreposage en blocs selon la revendication 1, **caractérisé en ce que** le volet (7) est disposé dans un coin de l'ouverture de passage (4) entre un côté longitudinal et un côté transversal et le serre-flan axial (18) est relié aussi bien au côté longitudinal qu'au côté transversal.

3. Agencement d'entreposage en blocs selon la revendication 2, **caractérisé en ce que** le serre-flan axial (18) est relié à l'aide de vis (21) au bord de l'ouverture de passage (4).

4. Agencement d'entreposage en blocs selon la revendication 3, **caractérisé en ce que** le serre-flan axial (18) comporte pour chacune des vis (21) une broche à vis (24) tournée vers le bord de l'ouverture de passage (4).

5. Agencement d'entreposage en blocs selon l'une quelconque des revendications 1 à 4, **caractérisé en ce que** le volet (7) est précontraint par un ressort (10) dans la position de retenue.

6. Agencement d'entreposage en blocs selon la revendication 5, **caractérisé en ce que** le ressort (10) est constitué sous la forme d'un ressort hélicoïdal, qui est disposé à l'extrémité de l'axe (8).

7. Agencement d'entreposage en blocs selon l'une quelconque des revendications 1 à 6, **caractérisé en ce que** l'ouverture de passage (4) comporte un profil de positionnement et le serre-flan axial (18) comporte un profil complémentaire (31) adapté.

8. Agencement d'entreposage en blocs selon l'une quelconque des revendications 1 à 7, **caractérisé en ce que** le serre-flan axial (18) est constitué sous la forme d'un élément en matière plastique.

9. Agencement d'entreposage en blocs selon l'une quelconque des revendications 1 à 8, **caractérisé en ce que** le serre-flan axial (18) comporte un chanfrein d'introduction (25) à son extrémité inférieure en direction de la force de gravité.

10. Agencement d'entreposage en blocs selon l'une quelconque des revendications 1 à 9, **caractérisé en ce que** l'ouverture de passage (4) est constituée dans un cadre (5), qui est disposé entre les espaces de logement pour conteneurs (2) et l'espace de chargement (3), sachant que l'axe (8) est logé dans le cadre (5).

11. Agencement d'entreposage en blocs selon la revendication 10, **caractérisé en ce que** le serre-flan axial (18) comporte une extension en direction de la force de gravité avec laquelle il recouvre le cadre (5) dans la direction de la force de gravité.

12. Agencement d'entreposage en blocs selon la revendication 11, **caractérisé en ce que** le serre-flan axial (18) comporte un évidement (31) dans lequel est logé le volet (7) dans la position de libération.

13. Agencement d'entreposage en blocs selon l'une quelconque des revendications 10 à 12, **caractérisé en ce que** le serre-flan axial (18) forme une surface de glissement sur son côté tourné vers l'ouverture de passage (4).

14. Agencement d'entreposage en blocs selon l'une quelconque des revendications 10 à 12, **caractérisé en ce que** le cadre (5) comporte des supports longitudinaux (13, 13') et des supports transversaux (14), qui sont reliés entre eux par des éléments d'angle (12), sachant que le serre-flan axial (18) est fixé à un élément d'angle (12) et le serre-flan axial (18) fait saillie sur l'élément d'angle (12) en direction des supports longitudinaux (13, 13') et/ou supports transversaux (14) fixés sur l'élément d'angle (12).
